# EUROPEAN PATENT SPECIFICATION

(11) **EP 2 570 644 B1**
(45) Date of publication and mention of the grant of the patent: **28.12.2016**
(21) Application number: 10851371.4
(22) Date of filing: 10.05.2010
(51) Int. Cl.: F02D 21/08, F02D 15/04, F02D 13/02, F02D 41/40, F02D 41/10, F02M 26/05, F02D 33/02

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 20.03.2013
(73) Proprietor: TOYOTA JIDOSHA KABUSHIKI KAISHA, Toyota-shi, Aichi-ken, 471-8571 (JP)
(72) Inventor: ITO, Katsuhiro, Toyota-shi, Aichi-ken, 471-8571 (JP); OGAWA, Takashi, Toyota-shi, Aichi-ken, 471-8571 (JP); KOGO, Tomoyuki, Toyota-shi, Aichi-ken, 471-8571 (JP); IWATA, Kazuyasu, Toyota-shi, Aichi-ken, 471-8571 (JP); YANASE, Yoshinori, Toyota-shi, Aichi-ken, 471-8571 (JP)
(74) Representative: Intès, Didier Gérard André
(86) International application number: PCT/JP2010/057896
(87) International publication number: WO 2011/141988

(56) References cited:
- EP-A1- 1 835 152
- EP-A2- 1 582 729
- JP-A- 11 287 143
- JP-A- 2002 357 153
- JP-A- 2004 353 485
- JP-A- 2004 353 485
- JP-A- 2005 291 001

## Description

### Technical Field

The present invention relates to a control apparatus for an internal combustion engine.

### Background Art

So far, for example, Patent Document 4 discloses an internal combustion engine that includes an exhaust gas recirculation passage (EGR passage) connecting an intake passage and an exhaust passage, an exhaust gas recirculation valve (EGR valve) for adjusting the flow rate of recirculated exhaust gas (EGR gas) flowing through the EGR passage and a variable valve operating mechanism for variable closing timing of an intake valve.

Including the above described document, the applicant is aware of the following documents as a related art of the present invention.

### Citation List

### Patent Documents

Patent Document 1: Japanese Laid-open Patent Application Publication No. 2006-29273
Patent Document 2: Japanese Laid-open Patent Application Publication No. 2008-208801
Patent Document 3: Japanese Laid-open Patent Application Publication No. Hei 5-163972
Patent Document 4: European Patent Application Publication EP 1 835 152 A1
Patent Document 5: JP 2004 353485 A

### Summary of Invention

### Technical Problem

When a closing operation of the EGR valve is performed during an opening period of the EGR valve, a response delay of EGR gas may occur due to a transport delay of EGR gas and an operation delay of the EGR valve. If such a response delay of EGR gas occurs, an actual EGR ratio of gas that is taken into a cylinder transiently becomes higher than a target EGR ratio. As a result of this, hydrocarbon (HC) emissions may increase due to deterioration of combustion of the internal combustion engine.

The present invention has been made to solve the problem as described above, and has its object to provide a control apparatus for an internal combustion engine that can suppress deterioration of combustion due to a response delay of recirculated exhaust gas.

### Solution to Problem

A first aspect of the present invention is a control apparatus for an internal combustion engine, comprising:
an exhaust gas recirculation passage that connects an intake passage and an exhaust passage;
an exhaust gas recirculation valve that adjusts a flow rate of recirculated exhaust gas that flows through the exhaust gas recirculation passage;
a variable valve operating mechanism that makes closing timing of an intake valve variable;
delay detection means that detects a response delay of the recirculated exhaust gas in association with a closing operation of the exhaust gas recirculation valve during an opening period of the exhaust gas recirculation valve; and
closing timing correction means that corrects the closing timing of the intake valve so that a compression end pressure increases when a response delay of the recirculated exhaust gas is detected by the delay detection means,
wherein the delay detection means detects a response delay of the recirculated exhaust gas when a negative change rate of a target exhaust gas recirculation ratio is greater than or equal to a predetermined threshold value.

A second aspect of the present invention is the control apparatus for an internal combustion engine according to the first aspect of the present invention,
wherein the delay detection means detects the response delay of the recirculated exhaust gas at acceleration of the internal combustion engine from a light load region.

A third aspect of the present invention is the control apparatus for an internal combustion engine according to the first or second aspects of the present invention,
wherein the closing timing correction means corrects the closing timing of the intake valve so that, as the negative change rate of the target exhaust gas recirculation ratio is greater, the compression end pressure becomes higher.

A fourth aspect of the present invention is the control apparatus for an internal combustion engine according to any one of the first to third aspects of the present invention, further comprising injection timing correction means that corrects fuel injection timing so as to approach a compression top dead center when a response delay of the recirculated exhaust gas is detected by the delay detection means.

### Advantageous Effects of Invention

According to the first aspect of the present invention, the occurrence of a response delay of the recirculated exhaust gas can be detected accurately, and the closing timing of the intake valve corrected so as to increase the compression end pressure. As a result of this, the compression end temperature can be increased. Therefore, the deterioration of combustion caused by a response delay of the recirculated exhaust gas can be suppressed.

According to the second aspect of the present invention, the occurrence of a response delay of the recirculated exhaust gas at acceleration from a light load region can be detected accurately.

According to the third aspect of the present invention, the closing timing of the intake valve can be corrected properly in accordance with the response delay amount of the recirculated exhaust gas to prevent deterioration of combustion.

According to the fourth aspect of the present invention, the deterioration of combustion due to a response delay of the recirculated exhaust gas can be prevented more efficiently by performing a correction of the fuel injection timing as well as the correction of the closing timing of the intake valve.

### Brief Description of Drawings

Fig. 1 is a diagram for explaining a system configuration according to a first embodiment of the present invention;
Fig. 2 is a diagram illustrating a response delay of EGR gas in association with a closing operation of an EGR valve;
Fig. 3 is a time chart illustrating operational states in which a response delay of EGR gas may occurs;
Fig. 4 is a flowchart of a routine that is executed in the first embodiment of the present invention;
Fig. 5 is a diagram for explaining the effect of a correction control of closing timing of an intake valve (IVC correction control) in the first embodiment of the present invention; and
Fig. 6 is a flowchart of a routine that is executed in a second embodiment of the present invention.

### Description of Embodiments

### First Embodiment

### [System Configuration of First Embodiment]

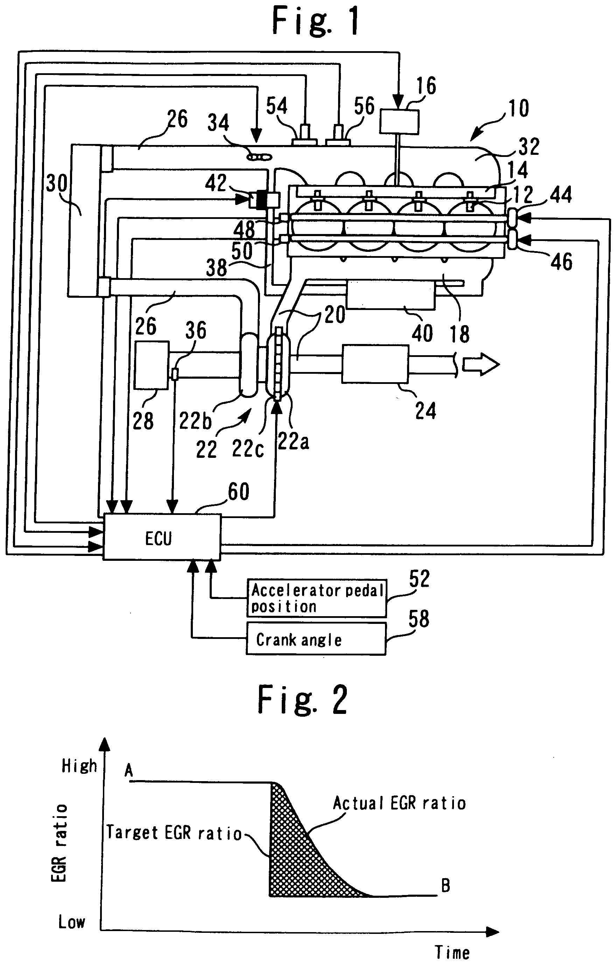

Fig. 1 is a diagram for explaining a system configuration according to a first embodiment of the present invention. The system shown in Fig. 1 includes an internal combustion engine 10. It is assumed herein that the internal combustion engine 10 is a 4-cycle diesel engine (compression ignition internal combustion engine) 10 and is mounted in a vehicle to work as its power source. Although the internal combustion engine 10 of the present embodiment is of an in-line 4 cylinder type, the number and arrangement of cylinders in the internal combustion engine in the present invention is not limited to the foregoing.

An injector 12 that directly injects fuel into the cylinder is installed in each cylinder of the internal combustion engine 10. The injector 12 of each cylinder is connected to a common common-rail 14. In the common-rail 14, a high pressure fuel which is pressurized by a supply pump 16 is stored. Then, from this common-rail 14, the fuel is supplied to the injector 12 of each cylinder. The exhaust gas discharged from each cylinder is collected by an exhaust manifold 18 to flow into an exhaust passage 20.

The internal combustion engine 10 includes a variable nozzle type turbocharger 22. The turbocharger 22 includes a turbine 22a which is operated by exhaust energy of exhaust gas, and a compressor 22b which is integrally coupled to the turbine 22a and is driven to rotate by the exhaust energy of the exhaust gas input to the turbine 22a. Further, the turbocharger 22 includes a variable nozzle (VN) 22c for adjusting the flow rate of the exhaust gas supplied to the turbine 22a.

The turbine 22a of the turbocharger 22 is disposed at some point in the exhaust passage 20. An exhaust gas purification device 24 that is capable of purifying the exhaust gas is installed at a downstream side of the turbine 22a in the exhaust passage 20.

An air cleaner 28 is provided in the vicinity of the inlet of an intake passage 26 of the internal combustion engine 10. The air suctioned through the air cleaner 28 is compressed by the compressor 22b of the turbocharger 22 and thereafter is cooled by an intercooler 30. The suctioned air which has passed through the intercooler 30 is distributed by an intake manifold 32 to flow into each cylinder. An intake throttle valve 34 is installed in the intake passage 26 between the intercooler 30 and the intake manifold 32. Moreover, an air flow meter 36 for detecting the quantity of intake air is installed near the downstream of the air cleaner 28 in the intake passage 26.

One end of an exhaust gas recirculation passage (hereinafter, referred to as an "EGR passage") 38 is connected to the vicinity of the intake manifold 32. The other end of the EGR passage 38 is connected to the exhaust manifold 18 of the exhaust passage 20. The present system can perform a control for recirculating part of the exhaust gas (burnt gas) to the intake passage 26 through the EGR passage 38, that is, an external EGR (Exhaust Gas Recirculation) control.

In some point of the EGR passage 38, an EGR cooler 40 is provided for cooling recirculated exhaust gas (hereinafter, referred to as an "EGR gas") which passes through the EGR passage 38. An exhaust gas recirculation valve (hereinafter, referred to as an "EGR valve") 42 is provided at the downstream of the EGR cooler 40 in the EGR passage 38. By changing the opening degree of the EGR valve 42, the flow rate of EGR gas which passes through the EGR passage 38 can be changed and thereby the EGR ratio can be adjusted. In this connection, the EGR ratio is a value obtained by dividing the EGR gas quantity that flows into the cylinder by the gas quantity (the sum of the intake air quantity and the EGR gas quantity) that flows into the cylinder.

Moreover, the internal combustion engine 10 includes an intake variable valve operating mechanism 44 which makes valve opening characteristics of an intake valve (not shown) variable, and an exhaust variable valve operating mechanism 46 which makes valve opening characteristics of an exhaust valve (not shown) variable. More specifically, it is assumed herein that each of these variable valve operating mechanisms 44 and 46 includes a phase variable mechanism (WT mechanism) which can continuously change opening and closing timings of the intake valve or exhaust valve while fixing an operating angle thereof, by changing a rotation phase of a camshaft with respect to a rotation phase of a crankshaft. Moreover, an intake cam angle sensor 48 and an exhaust cam angle sensor 50, which detect the respective rotation angles of the camshafts, that is, an intake cam angle and an exhaust cam angle, are disposed respectively in the vicinity of the intake camshaft and the exhaust camshaft.

Moreover, the system of the present embodiment includes an accelerator pedal position sensor 52 which detects a depression amount of an accelerator pedal (an accelerator pedal position) of the vehicle equipped with the diesel engine 10, an intake pressure sensor 54 for detecting an intake manifold pressure (intake pressure), an intake temperature sensor 56 for detecting an intake manifold temperature (intake temperature), and a crank angle sensor 58 for detecting a crank angle.

Furthermore, the system of the present embodiment includes an ECU (Electronic Control Unit) 60. Moreover, the various sensors and actuators described above are connected to the ECU 60. The ECU 60 can also calculate an engine rotational speed based on detection signals of the crank angle sensor 58. Further, the ECU 60 can calculate advance angle quantities of the opening and closing timing of the intake valve and the exhaust valve based on detection signals of the above described cam angle sensors 48 and 50. The ECU 60 controls the operational state of the internal combustion engine 10 by actuating each actuator according to the output of each sensor and predetermined programs.

Fig. 2 is a diagram illustrating a response delay of EGR gas in association with a closing operation of the EGR valve 42.

As shown in Fig. 2, when the EGR ratio is changed by the closing operation of the EGR valve 42 from a certain opening degree A to an opening degree B that is smaller than that, a change in the actual EGR ratio of gas actually taken into the cylinder is associated with a delay with respect to a change in the target EGR ratio. It is conceivable that factors for such a response delay of EGR gas include a transport delay of EGR gas into the cylinder and an operation delay of the EGR valve 42. Further, if a response delay of EGR gas occurs, the actual EGR ratio transiently becomes higher than the target EGR ratio. As a result of this, hydrocarbon (HC) emissions may increase due to deterioration of combustion of the internal combustion engine 10 depending on the extent of the response delay of EGR gas.

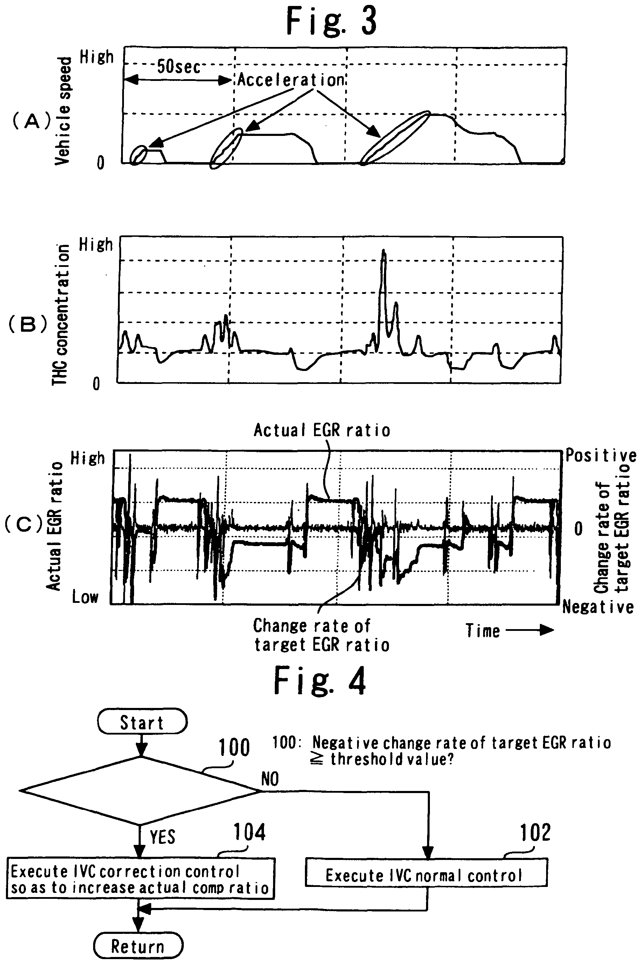

Fig. 3 is a time chart illustrating operational states in which a response delay of EGR gas may occurs. More specifically, Fig. 3(A) shows a waveform representing a change in vehicle speed of the vehicle (not shown) equipped with the internal combustion engine 10; Fig. 3(B) shows a waveform representing a change in the THC (Total Hydro Carbons) concentration in exhaust gas; and Fig. 3(C) shows waveforms representing the respective changes in each change rate of the target EGR ratio (thin line) and the actual EGR ratio (thick line).

Fig. 3 shows an example in which acceleration of the vehicle from a state where the vehicle speed is zero (that is, acceleration of the internal combustion engine 10 in a light load (no load) region) was performed three times. Upon acceleration, the EGR valve 42 is widely closed in order to introduce more fresh air into the cylinder and to thereby obtain favorable acceleration performance. When the opening degree of the EGR valve 42 is controlled toward the closing side, the change rate of the target EGR ratio (change rate of the current value with respect to the preceding value) becomes negative. Therefore, when the EGR valve 42 is widely closed upon acceleration, a situation in which the negative change rate of the target EGR ratio is large occurs as shown in Fig. 3(C).

As described above, a response delay of EGR gas occurs notably in a situation in which the negative change rate of the target EGR ratio is large. More specifically, the extent of the response delay of EGR gas becomes larger in a situation in which the EGR valve 42 is widely closed at an operational region in which a high EGR ratio (high EGR valve opening degree) is used, such as a time of acceleration from a light load region. For the reasons described so far, as shown in Fig. 3(B), the THC concentration in exhaust gas is likely to be high upon acceleration due to a response delay of EGR gas.

### [Characteristic control in the first embodiment]

In the present embodiment, when the negative change rate of the target EGR ratio is greater than or equal to a predetermined threshold value as a result of comparing the negative change rate with the threshold value, a configuration is accordingly adopted that detects the occurrence of a response delay of EGR gas in association with the closing operation of the EGR valve 42 during the opening period of the EGR valve 42. Further, a configuration is adopted that corrects the closing timing of the intake valve so that the actual compression ratio becomes high when the response delay of EGR gas is detected. More specifically, the correction of the closing timing of the intake valve is performed in the present embodiment to increase the actual compression ratio more as the negative change rate of the target EGR ratio is higher.

Fig. 4 is a flowchart of a control routine to be executed by the ECU 60 in the present first embodiment to realize the above described function. In this connection, it is assumed that the present routine is executed repeatedly at predetermined control intervals.

In the routine shown in Fig. 4, first, it is determined whether or not the negative change rate of the target EGR ratio is greater than or equal to a predetermined threshold value (step 100). The threshold value in present step 100 is a value that is previously set as a threshold value of the negative change rate of the target EGR ratio for judging whether or not the circumstances are such that a response delay of EGR gas will occur at a level at which there is a concern of deterioration of combustion.

If it is determined in above step 100 that the negative change rate of the target EGR ratio is less than the aforementioned threshold value, an IVC normal control is executed (step 102). The ECU 60 stores a base map (not shown) that previously sets the closing timing of the intake valve (IVC) using the relation with the operational state (fuel injection quantity Q (≅ torque) and engine rotational speed NE) of the internal combustion engine 10. According to this IVC normal control, the closing timing of the intake valve (IVC) is controlled so as to be a value in accordance with the operational state with reference to the aforementioned base map.

If, on the other hand, it is determined in above step 100 that the negative change rate of the target EGR ratio is greater than or equal to the threshold value, that is, a response delay of EGR is detected, an IVC correction control is executed (step 104). More specifically, according to this IVC correction control, the closing timing of the intake valve is corrected so that the actual compression ratio becomes higher than a value that is set in accordance with the operational state using the aforementioned base map. According to the processing of present step 104, if, for example, the closing timing of the intake valve is controlled basically at the retard side relative to the intake bottom dead center using the aforementioned base map, the closing timing of the intake valve is advanced with respect to the set value of the base map. In addition, in present step 104, the closing timing of the intake valve is corrected so that the actual compression ratio increases with an increase in the negative change rate of the target EGR ratio that is obtained in above step 100.

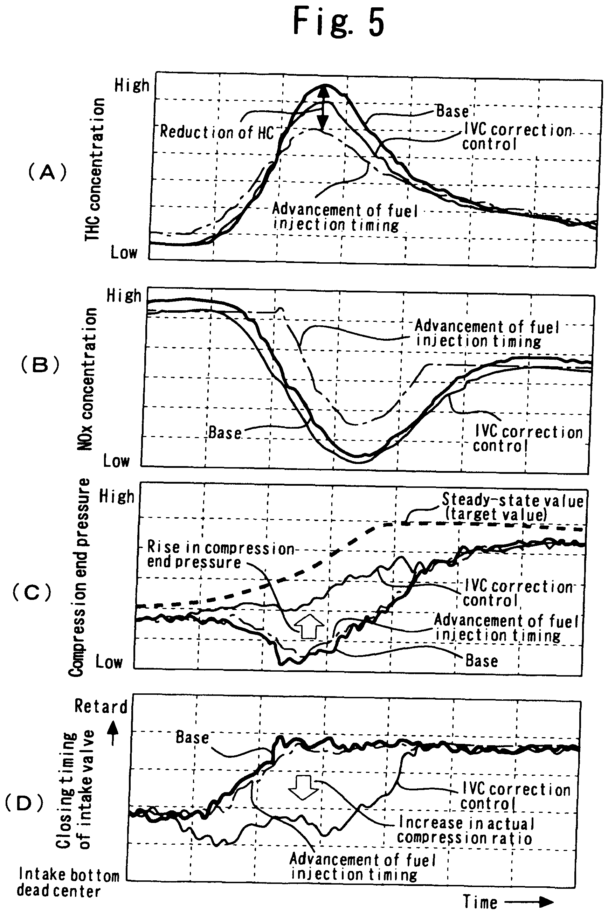

Fig. 5 is a diagram for explaining the effect of the correction control of the closing timing of the intake valve (IVC correction control) in the first embodiment of the present invention. More specifically, Fig. 5(A) shows a waveform representing a change in the THC concentration in exhaust gas; Fig. 5(B) shows a waveform representing a change in the NOx concentration in exhaust gas; Fig. 5(C) shows a waveform representing a change in compression end pressure; and Fig. 5(D) shows a waveform representing a change in the closing timing of the intake valve.

Fig. 5 shows an example of a control at a time when a response delay of EGR occurs in association with the closing operation of the EGR valve 42. Compared with a countermeasure against a response delay of EGR by advancing the fuel injection timing, the effect of the IVC correction control in the present embodiment will be described here. According to the IVC correction control, when a response delay of EGR gas is detected based on the negative change rate of the target EGR ratio, the closing timing of the intake valve is corrected so as to increase the actual compression ratio as shown in Fig. 5(D) (in the example shown in Fig. 5(D), the closing timing of the intake valve is advanced so as to approach the intake bottom dead center).

According to the above described IVC correction control, the compression end pressure is increased so as to approach a steady-state value that is in accordance with the operational state and transiently changes as shown in Fig. 5(C). As a result of this, the compression end temperature rises and thereby combustion (ignitability) improves. The HC emissions can be therefore reduced as shown in Fig. 5(A).

Even if, unlike the aforementioned IVC correction control, the fuel injection timing is advanced to a timing near the compression top dead center when a response delay of EGR gas is detected, the HC emissions can be reduced as shown in Fig. 5(A). However, according to the method using the advance of the fuel injection timing, as shown in Fig. 5(B), the NOx emissions are deteriorated with respect to a base value as a trade-off. In contrast, according to the IVC correction control in the present embodiment, the HC emissions can be reduced without a trade-off of deterioration of the NOx emissions.

Moreover, in the present embodiment, the occurrence of a response delay of EGR gas is detected by use of the negative change rate of the target EGR ratio that is a target value for EGR control. According to such a configuration, compared with a configuration that detects a response delay by use of output values of a certain sensor, a response delay of EGR gas can be detected accurately without being affected by causes of error such as a measuring error and the like

Furthermore, when the negative change rate of the target EGR ratio is high, that is, the EGR valve 42 is widely closed in a short period of time, a response delay amount of EGR gas increases. In the present embodiment, the closing timing of the intake valve is corrected at the time of detection of a response delay of EGR gas so as to increase the actual compression ratio with an increase in the negative change rate of the target EGR ratio. Thus, the closing timing of the intake valve can be corrected properly in accordance with the response delay amount of EGR gas for preventing deterioration of combustion.

It is noted that in the first embodiment, which has been described above, the "delay detection means" according to the aforesaid first aspect of the present invention is realized by the ECU 60 executing the processing of aforementioned step 100, and the "closing timing correction means" according to the aforesaid first aspect of the present invention is realized by the ECU 60 executing the processing of aforementioned step 104.

### Second Embodiment

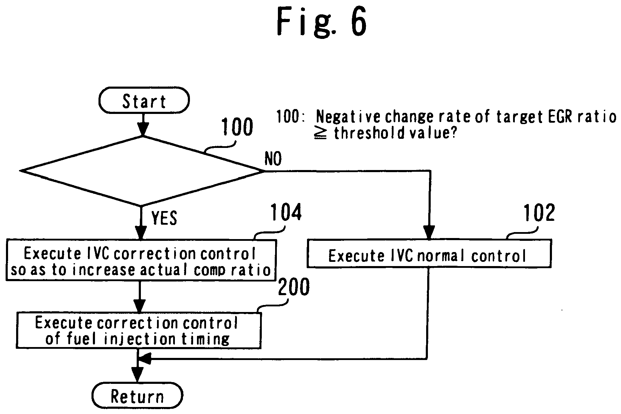

Next, a second embodiment of the present invention will be described with reference to Fig. 6.

A system of the present embodiment can be realized by causing the ECU 60 to execute a routine shown in Fig. 6 which will be described later instead of the routine shown in Fig. 4, by using the hardware configuration shown in Fig. 1.

Fig. 6 is a flowchart of a control routine to be executed in the second embodiment of the present invention. In Fig. 6, steps that are the same as steps in the flowchart illustrated in Fig. 4 according to the first embodiment are denoted by the same reference numbers, and a description of those steps is omitted or simplified below.

In the routine shown in Fig. 6, if it is determined that the negative change rate of the target EGR ratio is greater than or equal to the above described threshold value, a correction control of the fuel injection timing is executed in addition to the execution of the IVC correction control in aforementioned step 104 (step 200). More specifically, in present step 200, the fuel injection timing is corrected so as to approach the compression top dead center. If, for example, the fuel injection timing is controlled basically at the retard side relative to the compression top dead center, the fuel injection timing is advanced. Further, in present step 200, the fuel injection timing is corrected so as to move closer to the compression top dead center as the negative change rate of the target EGR ratio that is obtained in aforementioned step 100 is larger.

According to the routine shown in Fig. 6 described so far, when a response delay of EGR gas is detected based on the negative change rate of the target EGR ratio, the above described correction control of the fuel injection timing is executed in addition to the IVC correction control. The correction control of the fuel injection timing allows the fuel injection to be executed at a timing at which the in-cylinder temperature is high, and thereby the combustion stability can be enhanced. As a result of this, the HC emissions can be reduced when a response delay of EGR gas occurs. Consequently, the HC emissions in association with the response delay of EGR gas can be prevented more efficiently from increasing by executing the correction control of the fuel injection timing as well as the IVC correction control.

In the second embodiment, which has been described above, when a response delay is detected based on the negative change rate of the target EGR ratio, the aforementioned correction control of the fuel injection timing is executed in addition to the IVC correction control. Instead of such a correction control of the fuel injection timing, a configuration may be adopted that controls the opening degree of the variable nozzle 22c to the closing side as well as the IVC correction control. Closing the variable nozzle 22c reduces the inlet area of the turbine 22a, thereby allowing the flow speed of the exhaust gas, which is to be blown against the turbine 22a, to be increased. As a result, the turbo rotational speed increases, and thus the boost pressure can be increased. The compression end pressure can be therefore increased. Such correction of the opening degree of the variable nozzle 22c can also improve combustion to reduce the HC emissions.

It is noted that in the second embodiment, which has been described above, the "fuel timing correction means" according to the aforesaid fourth aspect of the present invention is realized by the ECU 60 executing the processing of aforementioned step 200.

Incidentally, in the first and second embodiments, which have been described above, the occurrence of a response delay of EGR in association with the closing operation of the EGR valve 42 is detected during the opening period of the EGR valve 42 when the negative change rate of the target EGR ratio is greater than or equal to the aforementioned threshold value.

Incidentally, in the first and second embodiments, which have been described above, the configuration is adopted that corrects the closing timing of the intake valve when detecting the occurrence of a response delay of EGR gas by use of the intake variable valve operating mechanism 44 that includes the phase variable mechanism which can change opening and closing timings of the intake valve while fixing an operating angle thereof. However, a configuration of a variable valve operating mechanism that is used in the present invention is not limited to the above described configuration. More specifically, the correction of the closing timing of the intake valve in the present invention may be performed by use of, for example, an operating angle variable mechanism which can continuously change the operating angle of the intake valve.

### Description of symbols

10 internal combustion engine
12 injector
18 exhaust manifold
20 exhaust passage
22 turbocharger
22c variable nozzle
24 exhaust gas purification device
26 intake passage
32 intake manifold
38 exhaust gas recirculation passage (EGR passage)
42 exhaust gas recirculation valve (EGR valve)
44 intake variable valve operating mechanism
48 intake cam angle sensor
60 ECU (Electronic Control Unit)

## Claims

1. A control apparatus for an internal combustion engine, comprising:
an exhaust gas recirculation passage (38) for connecting an intake passage (26) and an exhaust passage (20);
an exhaust gas recirculation valve (42) for adjusting a flow rate of recirculated exhaust gas that flows through the exhaust gas recirculation passage (38);
a variable valve operating mechanism (44) for making closing timing of an intake valve variable;
delay detection means for detecting a response delay of the recirculated exhaust gas in association with a closing operation of the exhaust gas recirculation valve (42) during an opening period of the exhaust gas recirculation valve (42); and
closing timing correction means for correcting the closing timing of the intake valve so that a compression end pressure increases when a response delay of the recirculated exhaust gas is detected by the delay detection means,
the control apparatus being **characterized in that** the delay detection means is configured to detect a response delay of the recirculated exhaust gas when a negative change rate of a target exhaust gas recirculation ratio is greater than or equal to a predetermined threshold value.

2. The control apparatus for an internal combustion engine according to claim 1, wherein the delay detection means is configured to detect the response delay of the recirculated exhaust gas at acceleration of the internal combustion engine from a light load region.

3. The control apparatus for an internal combustion engine according to any one of claims 1 or 2,
wherein the closing timing correction means is configured to correct the closing timing of the intake valve so that, as the negative change rate of the target exhaust gas recirculation ratio is greater, the compression end pressure becomes higher.

4. The control apparatus for an internal combustion engine according to any one of claims 1 to 3, further comprising injection timing correction means for correcting fuel injection timing so as to approach a compression top dead center when a response delay of the recirculated exhaust gas is detected by the delay detection means.

## Patentansprüche

1. Steuerungsvorrichtung für einen Verbrennungsmotor, umfassend:
einen Abgasrezirkulationskanal (38) zum Verbinden eines Einlasskanals (26) und eines Auslasskanals (20),
ein Abgasrezirkulationsventil (42) zum Einstellen einer Strömungsgeschwindigkeit des rezirkulierten Abgases, das durch den Abgasrezirkulationskanal (38) strömt,
einen Mechanismus für einen variablen Ventilbetrieb (44), mit dem die Schließzeiten eines Einlassventils variabel gemacht werden,
Verzögerungserfassungsmittel zum Erfassen einer Reaktionsverzögerung des rezirkulierten Abgases in Verbindung mit einem Schließvorgang des Abgasrezirkulationsventils (42) während einer Öffnungsphase des Abgasrezirkulationsventils (42) und
Schließzeit-Korrekturmittel zum Korrigieren der Schließzeit des Einlassventils, sodass ein Verdichtungsenddruck erhöht wird, wenn von dem Verzögerungserfassungsmittel eine Reaktionsverzögerung des rezirkulierten Abgases erfasst wird,
wobei die Steuerungsvorrichtung **dadurch gekennzeichnet ist, dass** das Verzögerungserfassungsmittel zum Erfassen einer Reaktionsverzögerung des rezirkulierten Abgases konfiguriert ist, wenn eine negative Veränderungsrate eines Zielverhältnisses der Abgasrezirkulation größer oder gleich einem vorbestimmten Schwellenwert ist.

2. Steuerungsvorrichtung für einen Verbrennungsmotor nach Anspruch 1, wobei das Verzögerungserfassungsmittel zum Erfassen der Reaktionsverzögerung des rezirkulierten Abgases bei Beschleunigung des Verbrennungsmotors aus einem geringen Lastbereich konfiguriert ist.

3. Steuerungsvorrichtung für einen Verbrennungsmotor nach einem der Ansprüche 1 oder 2,
wobei das Schließzeit-Korrekturmittel zum Korrigieren der Schließzeit des Einlassventils konfiguriert ist, sodass mit zunehmender negativer Veränderungsrate des Zielverhältnisses der Abgasrezirkulation der Verdichtungsenddruck zunimmt.

4. Steuerungsvorrichtung für einen Verbrennungsmotor nach einem der Ansprüche 1 bis 3, ferner umfassend Einspritzzeit-Korrekturmittel zum Korrigieren der Kraftstoffeinspritzzeit, sodass ein oberer Verdichtungstotpunkt erreicht wird, wenn von dem Reaktionsverzögerungsmittel eine Reaktionsverzögerung des rezirkulierten Abgases erfasst wird.

## Revendications

1. Appareil de commande pour un moteur à combustion interne, comportant :
un passage de recyclage de gaz d'échappement (38) destiné à relier un passage d'admission (26) et un passage d'échappement (20) ;
une vanne de recyclage de gaz d'échappement (42) destinée à ajuster un débit du gaz d'échappement remis en circulation qui s'écoule à travers le passage de recyclage de gaz d'échappement (38) ;
un mécanisme d'actionnement de soupape variable (44) destiné à rendre variable un calage de fermeture d'une soupape d'admission ;
des moyens de détection de retard destinés à détecter un retard de réponse du gaz d'échappement remis en circulation en association avec une opération de fermeture de la vanne de recyclage de gaz d'échappement (42) pendant une période d'ouverture de la vanne de recyclage de gaz d'échappement (42) ; et
des moyens de correction de calage de fermeture destinés à corriger le calage de fermeture de la soupape d'admission de telle sorte qu'une pression de fin de compression augmente quand un retard de réponse du gaz d'échappement remis en circulation est détecté par les moyens de détection de retard,
l'appareil de commande étant **caractérisé en ce que** les moyens de détection de retard sont configurés pour détecter un retard de réponse du gaz d'échappement remis en circulation quand un taux de changement négatif d'un rapport de recyclage de gaz d'échappement de cible est supérieur ou égal à une valeur de seuil prédéterminée.

2. Appareil de commande pour un moteur à combustion interne selon la revendication 1, dans lequel les moyens de détection de retard sont configurés pour détecter le retard de réponse du gaz d'échappement remis en circulation à l'accélération du moteur à combustion interne à partir d'une zone à faible charge.

3. Appareil de commande pour un moteur à combustion interne selon l'une quelconque des revendications 1 ou 2,
dans lequel les moyens de correction de calage de fermeture sont configurés pour corriger le calage de fermeture de la soupape d'admission de telle sorte que, lorsque le taux de changement négatif du rapport de recyclage de gaz d'échappement de cible est plus grand, la pression de fin de compression devient plus grande.

4. Appareil de commande pour un moteur à combustion interne selon l'une quelconque des revendications 1 à 3, comportant en outre des moyens de correction de calage d'injection destinés à corriger un calage d'injection de carburant de façon à s'approcher d'un point mort haut de compression quand un retard de réponse du gaz d'échappement remis en circulation est détecté par les moyens de détection de retard.
